# EUROPEAN PATENT APPLICATION

(11) **EP 2 680 388 A1**
(43) Date of publication of application: **01.01.2014**
(21) Application number: 12173973.4
(22) Date of filing: 28.06.2012
(51) Int. Cl.: H02J 3/14, H02J 13/00

(54) **Energy management gateway and method thereof**

(71) Applicant: ABB Research Ltd., 8050 Zürich (CH)
(72) Inventor: Hansen, Ewa, 722 23 Västerås (SE); Rossebø, Judith, 0852 Oslo (NO); Rizvanovic, Larisa, 724 71 Västerås (SE); Stoll, Pia, 72346 Västerås (SE); Lennvall, Tomas, 722 21 Västerås (SE)
(74) Representative: Partner, Lothar

(57) **Abstract**

The present invention relates to an energy management gateway configured to be positioned at a premises of a user of the gateway, the gateway comprising: a processor; a user interface; and a storage unit storing instructions which, when executed by the processor, cause the gateway to: in an enabled mode, communicate with an external service provider to obtain external information, and control electrical loads of a plurality of electrical devices at the premises based on said obtained information; in a disabled mode, communicate with the external service provider to obtain external information while not controlling the electrical loads of the plurality of electrical devices at the premises; and switch from the enabled mode to the disabled mode, or *vice versa,* upon receiving an inputted command to do so via the user interface.

## Description

### TECHNICAL FIELD

The invention relates to an energy management gateway configured to be positioned at a premises of a user of the gateway and to communicate with an external service provider to obtain external information and control electrical loads of a plurality of electrical devices at the premises based on said obtained information.

### BACKGROUND

According to the European Council (European Commission Research), the energy consumption of houses and buildings, taking into account the whole life cycle, stands for 40% of total EU energy consumption. Both transportation and food production consume less energy than our buildings.

In electricity grids, demand response (DR) is used to manage customer consumption of electricity in response to supply conditions, for example, having electricity customers reduce their consumption at critical times or in response to market prices. Demand response services, for industrial or residential buildings, have been around for long time, e.g., implemented as shutting off loads (load shedding) when the grid peak condition requires this. Direct control of heating, ventilation and conditioning (HVAC) equipment in industrial buildings are quite common today. But traditional DR is primary utilities' control task that often focuses on a few end users with limited customer options and fixed rates and participation incentives.

Energy gateways, used in today's DR, are usually provided by the utility (i.e. the energy provider) and tailored to fit in the certain configuration of the utility. A customer may be able to enter preferences as to how the gateway should control equipment based on received DR signals.

Home/building automation solutions are static in their configurations and user configuration has been possible for safety and comfort. Possibilities for a user to change settings/parameters of the system are limited to set actions, like setting thermostats or setting up a weekly schema for blinds, requiring only in-house information from in-house sensors. There is no possibility for the user to configure the home/building automation to react on dynamic changes in cost of energy or environmental impact of the energy use as this information can not be communicated to the home/building automation system in an automatic fashion.

US 6,216,956 discloses an indoor environmental condition control and energy management system including a plurality of inputs. A user input receives user input parameters including a desired indoor environmental condition range for at least one energy unit price point. An indoor environmental condition input receives a sensed indoor environmental condition. An energy price input receives a schedule of projected energy unit prices per time periods. A user may thus set e.g. a preferred indoor temperature depending on the price of electricity. The system may over time learn and automatically adapt to the regular preferences of a user, whereby a learned pattern is formed, the execution of which pattern may be disabled by the user.

US 7,110,832 discloses an energy management system for a single household appliance such as a washing machine or a fridge. A schedule of times for peak and off-peak electricity prices is obtained, e.g. downloaded from the internet to the appliance. A process (e.g. running a washing machine program) can be started automatically upon entry into the off-peak period. Alternatively, the energy management system of the appliance is disabled by the user to start the process immediately, even during peak period.

WO 2010/031013 discloses an air conditioner which can run in accordance with a plurality of modes. The mode is determined by a received signal, which may e.g. be a light sensor detecting when it is day-time. The user can override the current operating mode.

### SUMMARY

It is an objective of the present invention to improve the flexibility of an energy management gateway to adapt it to the needs of a user of the gateway.

The inventors propose to have energy management system (EMS) logic that schedules possible time slots when to run the electric loads according to user-set preferences regarding energy cost levels and environmental impact level of the loads. The EMS logic, stored in a storage unit of the user's energy management gateway, communicates with an environmental impact control user interface (UI) to get the user's preferences regarding energy management.

The inventors have also realised that it may sometimes be inconvenient to allow the gateway to control the electric loads of a user premises in accordance with its set scheme (based on e.g. DR and/or user preferences), e.g. when the user does not follow his/her regular routine e.g. has a party or is away on vacation. The inventors propose to solve this problem by allowing the user to disable the EMS logic (logically disconnecting the gateway from the electrical devices without physically disconnecting it). The gateway may continue to operate and e.g. communicate with an external service provider (e.g. DR), but without controlling the electric loads. This allows the user to control the electrical devices manually, without having to e.g. reprogram the gateway, and also allows the user to easily go back to the gateway controlling the electrical loads according to its scheme.

According to an aspect of the present invention, there is provided an energy management gateway configured to be positioned at a premises of a user of the gateway, the gateway comprising: a processor; a user interface; and a storage unit storing instructions which, when executed by the processor, cause the gateway to: in an enabled mode, communicate with an external service provider to obtain external information, and control electrical loads of a plurality of electrical devices at the premises based on said obtained information; in a disabled mode, communicate with the external service provider to obtain external information while not controlling the electrical loads of the plurality of electrical devices at the premises; and switch from the enabled mode to the disabled mode, or *vice versa,* upon receiving an inputted command to do so via the user interface.

According to another aspect of the present invention there is provided an energy management gateway configured to be positioned at a premises of a user of the gateway, the gateway comprising: means for communicating with an external service provider to obtain external information; means for controlling electrical loads of a plurality of electrical devices at the premises based on said obtained information, in an enabled mode of the gateway; means for receiving an inputted command via a user interface of the gateway to switch from the enabled mode to a disabled mode of the gateway; means for switching from the enabled mode to the disabled mode in response to the received command; and means for discontinuing the control of the electrical loads as a result of the switching to the disabled mode.

According to another aspect of the present invention there is provided a method of an energy management gateway positioned at a premises of a user of the gateway, the method comprising: communicating with an external service provider to obtain external information; controlling electrical loads of a plurality of electrical devices at the premises based on said obtained information, in an enabled mode of the gateway; receiving an inputted command via a user interface of the gateway to switch from the enabled mode to a disabled mode of the gateway; switching from the enabled mode to the disabled mode in response to the received command; and discontinuing the control of the electrical loads as a result of the switching to the disabled mode.

According to another aspect of the present invention there is provided a computer program product comprising computer-executable components for causing an energy management gateway to perform an embodiment of a method of the present disclosure when the computer-executable components are run on a processor comprised in said gateway.

According to another aspect of the present invention there is provided a computer program for an energy management gateway positioned at a premises of a user of the gateway, the computer program comprising computer program code which is able to, when run on a processor of the gateway, cause the gateway to: communicate with an external service provider to obtain external information; control electrical loads of a plurality of electrical devices at the premises based on said obtained information, in an enabled mode of the gateway; receive an inputted command via a user interface of the gateway to switch from the enabled mode to a disabled mode of the gateway; switch from the enabled mode to the disabled mode in response to the received command; and discontinue the control of the electrical loads as a result of the switching to the disabled mode.

According to another aspect of the present invention there is provided a computer program product comprising a computer program according to an embodiment of a computer program of the present disclosure and a computer readable means on which the computer program is stored.

In some embodiments, the gateway may, when in the enabled mode, be able to receive user preferences inputted via the user interface, and control the electrical loads of the plurality of electrical devices at the premises based on said inputted user preferences. It is also contemplated that the gateway may be able to receive user preferences inputted via the user interface when in its disabled mode, but it will then not control the loads based on the inputted user preferences until after it has been switched to the enabled mode.

In some embodiments, the user interface comprises a touch screen. This may be a convenient and self-explanatory way for a user to interact with the gateway e.g. for inputting commands and/or preferences to the gateway.

In some embodiments, the user interface is connectable to a wireless user equipment, e.g. a mobile phone or portable computer. This may allow a user to input commands and/or preferences to the gateway via a wireless user equipment (UE) over a radio interface. The UE may e.g. be a regular smartphone or computer of the user, possibly running an application designed for interacting with the gateway, or connected to such an application via the internet. The gateway may then not need a screen or such to present information to the user. Instead, such information may be presented on a screen of the UE by means of the application.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

The invention is now described, by way of example, with reference to the accompanying drawings, in which:
Fig 1 is a schematic block diagram of an embodiment of an energy management system of the present invention.
Fig 2 is a schematic block diagram of an embodiment of an energy management gateway of the present invention.
Fig 3 is a schematic block diagram of an embodiment of a storage unit of the gateway of figure 2.
Fig 4 schematically illustrates how a user can disable EMS logic via a graphical user interface in accordance with an embodiment of the present invention.
Fig 5 is a schematic flow chart of an embodiment of a method of the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

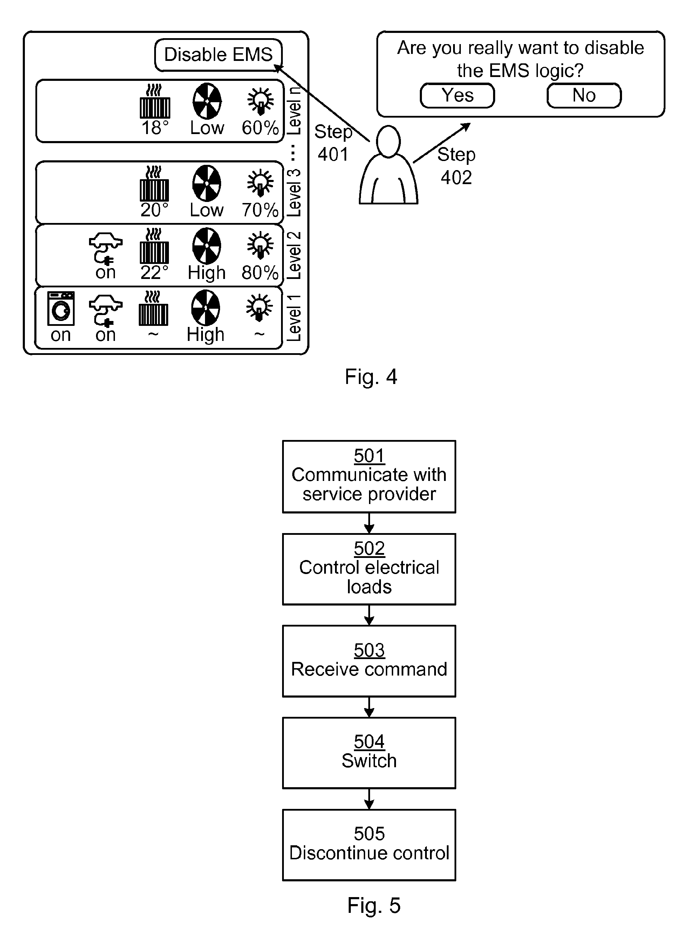

The present disclosure proposes a functionality to allow a user to enable and disable EMS logic of an energy management gateway via a user interface (UI), which may be called an energy cost and environmental impact control UI. The EMS logic may schedules possible time slots when to run the user's energy loads according to user set preferences regarding energy cost levels and environmental impact level of the loads. The EMS logic is deployed at the user's energy management gateway which communicates with: (1) external systems, e.g. utility systems, to get the energy cost and environmental impact information (e.g. carbon dioxide emissions associated with the electricity available for use at the user premises, or how the available electricity is produced such as from coal or from solar radiation), and (2) the user's energy cost and environmental impact control UI to get the user's selection of energy cost levels and environmental impact levels for the user's energy loads and when the user prefers to start the load. Thus, the user has access to an energy cost and environmental impact control UI, through which the user can communicate with its energy management gateway. The user can through interaction with the energy cost and environmental impact control UI, (see e.g. figure 4 discussed below), e.g. through touch-screen tapping, choose to enable or disable functionalities of EMS logic. When the EMS logic is deactivated, the user's energy loads are set in a manual (EMS disabled) control mode, i.e., the EMS logic will not have any control over the energy loads. The user may have to explicitly, through the interaction with the UI, enable the EMS logic, to switch the gateway from the disabled mode to the enabled mode.

The energy management gateway may be any suitable gateway able to send an energy information message to a service provider. The gateway may e.g. be an Energy Service Interface/ Home Area Network (ESI/HAN) gateway. The gateway is located at the premises of a user. The gateway holds EMS logic for controlling/monitoring electrical load(s) at the user premises according to its configuration mode. The premises may e.g. be a residential or industrial building or other facility. The gateway may also involve control of charging or discharging of local electricity storage such as batteries or the like, and/or of local energy production e.g. solar or wind power equipment at the user premises. Information exchanged with the external service provider may include user energy consumption information, information about the energy efficiency of the energy management system and/or about the home automation system or changes to be introduced to settings in the energy management or home automation system.

A computer program product, as discussed herein, comprises a computer readable medium holding a computer program in the form of computer-executable components or instructions. The computer program may be configured to cause an energy management gateway to perform an embodiment of a method discussed herein. The computer program may be run on a processor of the gateway for causing the gateway to perform the method. The computer program product may e.g. be or be comprised in a storage unit or memory comprised in the gateway and associated with the processor. Alternatively, the computer program product may be, or be part of, a separate, e.g. mobile, storage means, such as a computer readable disc, e.g. CD or DVD or hard disc/drive, or a solid state storage medium, e.g. a RAM or Flash memory.

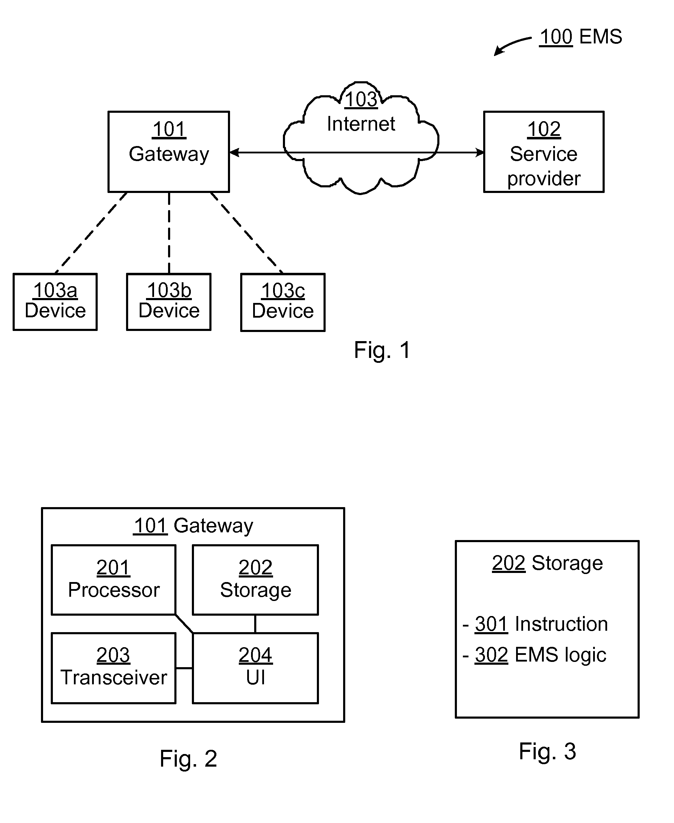

Figure 1 schematically illustrates an energy management system (EMS) 100 where an energy management gateway 101 of the EMS communicates with a server 102 of a service provider via a network 103, e.g. the internet and/or a wide area network (WAN). The communication may be wired or at least partly wireless. If the communication is at least partly wireless, the gateway 101 may be configured to connect to the network 103 over a radio interface, while the server 102 connects to the network 103 via a wired interface. Messages are transmitted from the gateway 101 to the server 102 and *vice versa* (as indicated by the arrow in figure 1). The gateway 101 is associated with a plurality of electrical devices 103 (here illustrated by three devices a-c) and is configured to be able to control the electrical loads of each of the devices 103.

Figure 2 schematically illustrates an embodiment of an energy management gateway 101. The gateway 101 comprises a processor 201 e.g. a central processing unit (CPU). The processor 201 may comprise one or a plurality of processing units in the form of microprocessor(s). However, other suitable devices with computing capabilities could be comprised in the processor 201, e.g. an application specific integrated circuit (ASIC), a field programmable gate array (FPGA) or a complex programmable logic device (CPLD). The processor 201 is configured to run one or several computer program(s) or software (here generally called instructions) stored in a storage unit 202 e.g. a memory. The storage unit 202 is regarded as a computer readable means and may e.g. be in the form of a Random Access Memory (RAM), a Flash memory or other solid state memory, or a hard disk, or a combination thereof. The processor 201 is also configured to store data in the storage unit 202, as needed. The gateway 101 also comprises a transmitter and a receiver, and optionally (if the gateway is configured for communication over a radio interface) an antenna, which may be combined to form a transceiver 203 or be present as distinct units within the gateway 101. The transmitter is configured to cooperate with the processor to transform data bits to be transmitted e.g. over a radio interface to a suitable radio signal in accordance with the radio access technology (RAT) used by the Radio Access Network (RAN) via which the data bits are to be transmitted. The receiver is configured to cooperate with the processor 201 to transform e.g. a received radio signal to transmitted data bits. The antenna, if used, is used by the transceiver 204 for transmitting and receiving, respectively, radio signals. The gateway 101 also comprises a user interface (UI) 203 comprised in or in cooperation with the processor 201 for e.g. allowing a user to input preferences and/or other commands or information into the gateway 101. The gateway may e.g. be a graphical user interface (GUI).

Figure 3 schematically illustrates an embodiment of the storage unit 202 of the gateway 101 of figure 2. The storage unit 202 holds the EMS logic 302 for controlling the loads of the electrical devices 103. The storage unit 202 also holds any other software or instructions 301 for running/controlling the gateway 101 when the instructions 301 are executed by the processor 201.

Figure 4 illustrates how a user may switch the gateway 101 from the enabled mode to the disabled mode by interaction with a GUI 204. The GUI is in this embodiment a touch screen of the gateway or of a UE connected to the gateway. Via the GUI 204, the user can choose between different gateway levels, indicated as levels 1..n in the figure, which allows the user to control how the EMS logic 302 of the gateway controls the loads of the electrical devices 103. However, there is also a graphical push button which allows the user to, by pressing 401 the button, disable the EMS logic, switching the gateway to the disabled mode, whereby the gateway 101 no longer is able to control the loads of the devices 103. As an extra safety measure, a dialog box may appear on the GUI in response to the user pressing 401 the disable button, whereby the user has to press 402 an additional graphical button in order to confirm that the EMS logic should be disabled. The switch to the disabled mode is then not effected until confirmed by the user.

Figure 5 is a schematic flow chart of an embodiment of the inventive method of the gateway 101. The gateway 101 communicates 501 with a server of the external service provider 102 to obtain external information therefrom, e.g. DR signals. In an enabled mode of the gateway, electrical loads of a plurality of electrical devices 103 at the premises are controlled 502 by the gateway based on said obtained information from the service provider 102. The gateway then receiving 503 an inputted command, via the user interface 204 of the gateway, to switch from the enabled mode to a disabled mode of the gateway. In response to the received 503 command the gateway switches 504 from the enabled mode to the disabled mode. As a result of the switching 504 to the disabled mode the gateway discontinues 505 the control 502 of the electrical loads. The electrical loads can then instead be controlled manually via e.g. regular power switches etc.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An energy management gateway (101) configured to be positioned at a premises of a user of the gateway, the gateway comprising:
a processor (201);
a user interface (204); and
a storage unit (202) storing instructions (301) which, when executed by the processor (201), cause the gateway (101) to:
in an enabled mode, communicate (501) with an external service provider (102) to obtain external information, and control (502) electrical loads of a plurality of electrical devices (103) at the premises based on said obtained information;
in a disabled mode, communicate (501) with the external service provider (102) to obtain external information while not controlling (505) the electrical loads of the plurality of electrical devices (103) at the premises; and
switch (504) from the enabled mode to the disabled mode, or *vice versa,* upon receiving (503) an inputted command to do so via the user interface.

2. The gateway of claim 1, wherein the instructions (301) cause the gateway (101) to:
in the enabled mode, be able to receive user preferences inputted via the user interface, and control (502) the electrical loads of the plurality of electrical devices (103) at the premises based on said inputted user preferences.

3. The gateway of claim 1 or 2, wherein the user interface (204) comprises a touch screen.

4. The gateway of claim 1 or 2, wherein the user interface (204) is connectable to a wireless user equipment.

5. A method of an energy management gateway (101) positioned at a premises of a user of the gateway, the method comprising:
communicating (501) with an external service provider (102) to obtain external information;
controlling (502) electrical loads of a plurality of electrical devices (103) at the premises based on said obtained information, in an enabled mode of the gateway;
receiving (503) an inputted command via a user interface (204) of the gateway (101) to switch from the enabled mode to a disabled mode of the gateway;
switching (504) from the enabled mode to the disabled mode in response to the received (503) command; and
discontinuing (505) the control (502) of the electrical loads as a result of the switching (504) to the disabled mode.

6. The method of claim 5, further comprising:
receiving user preferences inputted via the user interface (204); and
controlling the electrical loads of the plurality of electrical devices (103) at the premises based on said inputted user preferences, in the enabled mode of the gateway (101).

7. A computer program product comprising computer-executable components for causing an energy management gateway (101) to perform the method of claim 5 or 6 when the computer-executable components are run on a processor (201) comprised in said gateway.

8. A computer program for an energy management gateway (101) positioned at a premises of a user of the gateway, the computer program comprising computer program code which is able to, when run on a processor (201) of the gateway, cause the gateway to:
communicate (501) with an external service provider (102) to obtain external information;
control (502) electrical loads of a plurality of electrical devices (103) at the premises based on said obtained information, in an enabled mode of the gateway (101);
receive (503) an inputted command via a user interface (204) of the gateway (101) to switch from the enabled mode to a disabled mode of the gateway;
switch (504) from the enabled mode to the disabled mode in response to the received (503) command; and
discontinue (505) the control (502) of the electrical loads as a result of the switching (504) to the disabled mode.

9. A computer program product comprising a computer program according to claim 8 and a computer readable means (202) on which the computer program is stored.

10. An energy management gateway (101) configured to be positioned at a premises of a user of the gateway, the gateway comprising:
means (201, 203) for communicating (501) with an external service provider (102) to obtain external information;
means (201) for controlling (502) electrical loads of a plurality of electrical devices (103) at the premises based on said obtained information, in an enabled mode of the gateway;
means (201, 204) for receiving (503) an inputted command via a user interface (204) of the gateway (101) to switch from the enabled mode to a disabled mode of the gateway;
means (201) for switching (504) from the enabled mode to the disabled mode in response to the received (503) command; and
means (201) for discontinuing (505) the control (502) of the electrical loads as a result of the switching (504) to the disabled mode.
